**Europäisches Patentamt**

**European Patent Office**

**Office européen des brevets**

(19)

(11) **EP 1 480 384 A1**

(12) ## EUROPÄISCHE PATENTANMELDUNG

(43) Veröffentlichungstag:
**24.11.2004 Patentblatt 2004/48**

(51) Int Cl.⁷: **H04L 12/28**, H04Q 7/36

(21) Anmeldenummer: **03405356.1**

(22) Anmeldetag: **21.05.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Swisscom AG**
**3000 Bern 29 (CH)**

(72) Erfinder:
- **Rossier, Daniel**
  **1782 Belfaux (CH)**
- **Varone, Sacha**
  **1963 Vétroz (CH)**
- **Wagen, Jean-Frédéric**
  **1740 Neyruz (CH)**

- **Inguscio, Vincenzo**
  **2800 Delmont (CH)**
- **Marchon, Eric**
  **1725 Posieux (CH)**
- **Gamba, Fiorenzo**
  **1566 St-Aubin (CH)**

(74) Vertreter: **BOVARD AG - Patentanwälte**
**Optingenstrasse 16**
**3000 Bern 25 (CH)**

Bemerkungen:
Geänderte Patentansprüche gemäss Regel 86 (2) EPÜ.

(54) **System für die dynamische Zuweisung von Trägerfrequenzen zu Zugriffspunkten eines lokalen Funknetzes (WLAN)**

(57) Ein computerbasiertes System (4') für die dynamische Zuweisung von Trägerfrequenzen zu computerisierten Zugriffspunkten (AP1, AP2, APn) eines lokalen Funknetzes (7), ein so genanntes WLAN, wird über eine Kommunikationsverbindung (6) mit den Zugriffspunkten (AP1, AP2, APn) verbunden. Aktuelle Betriebswerte, wie die aktuelle Anzahl assoziierter Benutzer sowie die aktuelle Anzahl empfangener fehlerhafter und fehlerloser Datenpakete, werden durch autonome Agentenmodule (AM1, AM2, AMn) des computerbasierten Systems (4') über die Kommunikationsverbindung (6) aus den Zugriffspunkten (AP1, AP2, APn) erfasst. Im computerbasierten System (4') werden basierend auf den erfassten Betriebswerten individuelle Gewichtungsfaktoren für die Zugriffspunkte (AP1, AP2, APn) berechnet. Zugriffspunktinformationen über die Zugriffspunkte (AP1, AP2, APn), welche aktuelle Trägerfrequenzen und Gewichtungsfaktoren umfassen, werden im computerbasierten System (4') gespeichert. Basierend auf den gespeicherten Zugriffspunktinformationen werden im computerbasierten System (4') optimale Trägerfrequenzen, respektive Funkkanäle, zur Reduzierung von Interferenzen zwischen den Zugriffspunkten (AP1, AP2, APn) ermittelt und über die Kommunikationsverbindung (6) in den Zugriffspunkten (AP1, AP2, APn) gesetzt. Optimale Trägerfrequenzen respektive Funkkanäle können so ermittelt und in den Zugriffspunkten (AP1, AP2, APn) gesetzt werden, ohne dass dafür Ressourcen des lokalen Mobilfunknetzes (7) verwendet werden müssen und ohne dass Änderungen an den Zugriffspunkten (AP1, AP2, APn) vorgenommen werden müssen.

FIG. 2

EP 1 480 384 A1

**Beschreibung**

Technisches Gebiet

Die vorliegende Erfindung betrifft ein System für die dynamische Zuweisung von Trägerfrequenzen zu Zugriffspunkten eines lokalen Funknetzes. Die Erfindung betrifft insbesondere ein computerbasiertes System für die dynamische Zuweisung von Trägerfrequenzen zu computerisierten Zugriffspunkten eines lokalen Funknetzes sowie ein Computerprogrammprodukt zur Steuerung eines oder mehrerer Prozessoren eines solchen computerbasierten Systems.

Stand der Technik

Lokale Funknetze, so genannte Wireless Local Area Networks (WLAN), werden immer mehr auch im öffentlichen Raum verwendet, wo sie mobilen Benutzern Zugang zu Computersystemen, Datenbanken, Kommunikationsnetzen und Datennetzen, insbesondere zum Internet, ermöglichen. Die mobilen Benutzer haben mit ihren Endgeräten über einen Zugriffspunkt, ein so genannter Access Points (AP), Zugang zu einem lokalen Funknetz. Die Endgeräte sind beispielsweise Laptop- oder Palmtop Computer, die mit einem Kommunikationsmodul für lokale Funknetze ausgestattet sind. Um den Zugang zu einem lokalen Funknetz flächendeckend in einem ausgedehnten geografischen Bereich zu ermöglichen, werden mehrere computerisierte Zugriffspunkte vorgesehen, die jeweils einen Teilbereich abdecken. Typischerweise überlappen sich die Funkbereiche von benachbarten Zugriffspunkten. Obwohl die Zugriffspunkte über mehrere selektierbare Funkkanäle mit verschiedenen Trägerfrequenzen verfügen, treten trotzdem oft Interferenzprobleme zwischen benachbarten Zugriffspunkten auf, einerseits weil die Anzahl verfügbarer Funkkanäle begrenzt ist und andererseits weil die Signalbandbreiten der verschiedenen Funkkanäle sich zum Teil überlappen können. Gegenwärtig ist zum Beispiel die IEEE Norm 802.11 die am häufigsten verwendete Norm für die Zugriffspunkte der lokalen Funknetze. Der gegenwärtig verwendete Frequenzplan gemäss dieser Norm sieht elf oder dreizehn Funkkanäle vor, deren Signalbandbreiten sich teilweise überlappen. Es sind nur drei Funkkanäle vorgesehen die sich gegenseitig nicht stören: in Europa sind dies üblicherweise die Funkkanäle 1, 7 und 13, in den USA sind dies üblicherweise die Funkkanäle 1, 6 und 11. Die Auswirkungen der Funkinterferenz werden zwar durch spezielle Mechanismen für den Medienzugriff gemildert, beispielsweise durch Carrier Sense Multiple Access/Collision Avoidance (CSMA/CA), dies geschieht jedoch zu Lasten der Übertragungskapazität. Um zu vermeiden, dass sich benachbarte Zugriffspunkte gegenseitig durch Funkinterferenz stören, werden die Zugriffspunkte oft unter Zuhilfenahme von Simulationsprogrammen positioniert, die den Verlauf von elektromagnetischen Feldern modellieren. Solche Simulationsprogramme benötigen jedoch eine detaillierte Beschreibung der Umgebung und der Topologie. Zudem sind solche Verfahren nicht besonders geeignet für die Berücksichtigung des sich dynamisch verändernden Verkehrs in einem lokalen Funknetz und bieten keine Möglichkeiten, bereits positionierte Zugriffspunkte an geänderte Verhältnisse anzupassen.

In der Patentanmeldung EP 1257092 werden ein Verfahren und speziell angepasste Zugriffspunkte für die dynamische Wahl von Trägerfrequenzen in Zugriffspunkten eines lokalen Funknetzes beschrieben. Gemäss EP 1257092 überwachen die computerisierten Zugriffspunkte ihre Verkehrslast und tauschen Informationen über ihre Verkehrslast mit benachbarten Zugriffspunkten aus. In den Zugriffspunkten werden gemäss EP 1257092 Interferenzparameter für die verschiedenen Funkkanäle berechnet und darauf basierend optimale Funkkanäle bestimmt. Gemäss EP 1257092 hat ein Zugriffspunkt die Möglichkeit, einen benachbarten Zugriffspunkt anzufragen, gegenseitig die momentan verwendeten Funkkanäle auszutauschen. Ein weiteres Verfahren, in welchem Funkkanäle durch spezielle Softwaremodule in den Zugriffspunkten dynamisch gewählt werden, wird in der Patentanmeldung EP 1257090 beschrieben. Die Verfahren gemäss EP 1257092 und EP 1257090 weisen den Nachteil auf, dass die computerisierten Zugriffspunkte abweichend von ihrer standardgemässen Ausführung mit zusätzlichen Softwaremodulen versehen werden müssen. Zudem werden die Verfahren gemäss EP 1257092 und EP 1257090 laufend durchgeführt, was beim Wechsel des Funkkanals dazu führen kann, dass ein mobiles Endgerät wegen eines temporären Signalverlusts zu einem anderen Zugriffspunkt wechselt.

In der Patentanmeldung US 2002/0060995 werden ein System und Verfahren für die dynamische Wahl von Funkkanälen zwischen dem Zugriffspunkt und Endgeräten eines lokalen Funknetzes beschrieben. Gemäss US 2002/0060995 misst ein Endgerät auf Anfrage des AP die Signalstärke und die Bitfehlerrate auf mehreren Kanälen mit benachbarten Zugriffspunkten und übermittelt die Messresultate an den anfragenden Zugriffspunkt. Auf Grund der empfangenen Messresultate wählt der Zugriffspunkt gemäss US 2002/0060995 gegebenenfalls einen neuen Funkkanal. Das Verfahren gemäss US 2002/0060995 weist den Nachteil auf, dass sowohl die computerisierten Zugriffspunkte als auch die Endgeräte mit zusätzlichen Softwaremodulen versehen werden müssen. Gemäss US 2002/0060995 muss der computerisierte Zugriffspunkt zudem den Wechsel zu einem neuen Funkkanal mittels spezieller Meldungen sämtlichen Endgeräten ankündigen. Sowohl Ressourcen des Zugriffpunkts als auch Ressourcen der Endgeräte müssen für die Qualitätsmessung und für den Kanalwechsel aufgewendet werden.

Darstellung der Erfindung

Es ist eine Aufgabe der vorliegenden Erfindung, ein neues computerbasiertes System für die dynamische Zuweisung von Trägerfrequenzen zu computerisierten Zugriffspunkten eines lokalen Funknetzes sowie ein Computerprogrammprodukt zur Steuerung eines oder mehrerer Prozessoren eines solchen computerbasierten Systems vorzuschlagen, welche nicht die Nachteile des Stands der Technik aufweisen. Insbesondere ist es eine Aufgabe der vorliegenden Erfindung, ein neues computerbasiertes System sowie ein dafür geeignetes Computerprogrammprodukt vorzuschlagen, welche die dynamische Zuweisung von Trägerfrequenzen zu computerisierten Zugriffspunkten eines lokalen Funknetzes ermöglichen, ohne dass dazu Software- oder Hardware-Änderungen an den computerisierten Zugriffspunkten des lokalen Funknetzes vorgenommen werden müssen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass ein computerbasiertes System für die dynamische Zuweisung von Trägerfrequenzen zu den computerisierten Zugriffspunkten eines lokalen Funknetzes vorgesehen wird, welches computerbasierte System mit den computerisierten Zugriffspunkten über eine Kommunikationsverbindung verbindbar ist. Erfindungsgemäss ist das computerbasierte System eingerichtet zum Speichern von Zugriffspunktinformationen über die computerisierten Zugriffspunkte, wobei die Zugriffspunktinformationen jeweils mindestens die aktuelle Trägerfrequenz des betreffenden computerisierten Zugriffspunkts umfassen. Schliesslich ist das computerbasierte System eingerichtet zum Ermitteln einer optimalen Trägerfrequenz für einen ersten der computerisierten Zugriffspunkte, basierend auf den gespeicherten Zugriffspunktinformationen über die computerisierten Zugriffspunkte, und zum Setzen der ermittelten optimalen Trägerfrequenz im ersten computerisierten Zugriffspunkt über die Kommunikationsverbindung. Durch Speicherung der Zugriffspunktinformationen im computerbasierten System und durch die Ermittlung optimaler Trägerfrequenzen für die computerisierten Zugriffspunkte im computerbasierten System basierend auf den gespeicherten Zugriffspunktinformationen können für die Zugriffspunkte individuelle, optimierte Trägerfrequenzen unter Berücksichtigung von Zugriffspunktinformationen benachbarter Zugriffspunkte bestimmt werden. Das heisst, bei der Ermittlung der optimalen Trägerfrequenz für einen betreffenden Zugriffspunkt werden nicht nur Informationen über den betreffenden Zugriffspunkt, sondern auch Informationen über sämtliche Zugriffspunkte in der Nachbarschaft des betreffenden Zugriffspunkts mitberücksichtigt. Durch die Ermittlung optimaler Trägerfrequenzen im computerbasierten System und durch Setzen der ermittelten optimalen Trägerfrequenzen in den Zugriffspunkten über die Kommunikationsverbindung können den Zugriffspunkten optimierte Trägerfrequenzen zugewiesen werden, ohne dass zu diesem Zweck in den Zugriffspunkten oder in den Endgeräten des lokalen Funknetzes spezielle Schritte unternommen, zusätzliche Messungen durchgeführt oder Daten erfasst werden müssen. Das heisst, die Ressourcen des lokalen Mobilfunknetzes müssen nicht für die Ermittlung und das Setzen der optimalen Trägerfrequenz verwendet werden.

Vorzugsweise ist das computerbasierte System eingerichtet zum Erfassen aktueller Betriebswerte vom ersten computerisierten Zugriffspunkt über die Kommunikationsverbindung. Ohne Änderungen an den Zugriffspunkten können so standardmässige Betriebswerte der Zugriffspunkte durch das computerbasierte System über die Kommunikationsverbindung erfasst und im computerbasierten System gespeichert werden. Betriebswerte, die durch das computerbasierte System von den computerisierten Zugriffspunkten erfasst werden, umfassen beispielsweise Angaben über die aktuelle Anzahl Benutzer, die mit dem betreffenden computerisierten Zugriffspunkt assoziert sind, über die aktuelle Anzahl empfangener fehlerhafter Datenpakete im betreffenden computerisierten Zugriffspunkt und über die aktuelle Anzahl empfangener fehlerloser Datenpakete im betreffenden computerisierten Zugriffspunkt. Vorzugsweise ist das computerbasierte System eingerichtet zum Berechnen eines Gewichtungsfaktors für den ersten computerisierten Zugriffspunkt basierend auf den erfassten Betriebswerten des ersten computerisierten Zugriffspunkts und zum Speichern von Zugriffspunktinformationen, die den berechneten Gewichtungsfaktor des ersten computerisierten Zugriffspunkts und Gewichtungsfaktoren von zweiten der computerisierten Zugriffspunkte umfassen. Das computerbasierte System ist vorzugsweise eingerichtet zum Ermitteln der optimalen Trägerfrequenz für den ersten computerisierten Zugriffspunkt basierend auf der gespeicherten aktuellen Trägerfrequenz des ersten computerisierten Zugriffspunkts, basierend auf den gespeicherten Gewichtungsfaktoren der zweiten computerisierten Zugriffspunkte und basierend auf den gespeicherten aktuellen Trägerfrequenzen der zweiten computerisierten Zugriffspunkte. Durch die Berechnung und Speicherung von Gewichtungsfaktoren für die computerisierten Zugriffspunkte basierend auf Betriebswerten der Zugriffspunkte und durch die Berücksichtigung der Gewichtungsfaktoren bei der Ermittlung der optimalen Trägerfrequenzen kann die Höhe der Bedeutung und des Einflusses eines benachbarten computerisierten Zugriffspunkts auf die Ermittlung der optimalen Trägerfrequenzen gemäss definierten Kriterien individuell bestimmt werden.

In einer Ausführungsvariante ist das computerbasierte System eingerichtet zum Berechnen des Gewichtungsfaktors für den ersten computerisierten Zugriffspunkt basierend auf einer Benutzungsrate des ersten computerisierten Zugriffspunkts, basierend auf einer Störungsrate des ersten computerisierten Zugriffspunkts und basierend auf einer Benutzungswahrscheinlichkeit des ersten computerisierten Zugriffspunkts. Das computerbasierte System berechnet den Gewichtungsfaktor für einen Zugriffspunkt beispielsweise basierend auf der Benutzungsrate, die durch Division der erfassten Anzahl Benutzer des ersten Zugriffspunkts durch eine maximale Anzahl von Benutzern des ersten Zugriffspunkts berechnet wird, basierend auf einer Störungsrate, die durch Division der erfassten Anzahl empfangener fehlerhafter Datenpakete im ersten Zugriffspunkt durch die totale Anzahl empfangener Datenpakete im ersten Zugriffspunkt berechnet wird, und basierend auf einer Benutzungswahrscheinlichkeit, die, beispielsweise gemäss Poisson, aus gespeicherten historischen Werten der erfassten Anzahl Benutzer des ersten Zugriffspunkts berechnet wird. Der Einfluss eines benachbarten Zugriffspunkts auf die Ermittlung der optimalen Trägerfrequenzen kann also davon abhängig gemacht werden, wie häufig der betreffende benachbarte Zugriffspunkt von Benutzern mit Endgeräten benützt wird, wie stark der betreffende benachbarte Zugriffspunkt durch Störungen belastet wird und wie gross die Wahrscheinlichkeit ist, dass der betreffende benachbarte Zugriffspunkt von Benutzern mit Endgeräten benützt wird. Vorzugsweise wird die Benutzungsrate höher gewichtet, beispielsweise dreifach, als die Störungsrate und die Benutzungswahrscheinlichkeit.

Vorzugsweise ist das computerbasierte System eingerichtet, die optimale Trägerfrequenz für den ersten computerisierten Zugriffspunkt zu ermitteln, indem aus mehreren definierten Funkkanälen ein Funkkanal mit einer zugeordneten Trägerfrequenz so gewählt wird, dass die Summe der Differenzen zwischen der zugeordneten Trägerfrequenz und den gespeicherten aktuellen Trägerfrequenzen der zweiten computerisierten Zugriffspunkte möglichst gross ist, wobei die Differenzen jeweils durch den gespeicherten Gewichtungsfaktor des betreffenden zweiten computerisierten Zugriffspunkts gewichtet werden. Das heisst, die optimale Trägerfrequenz respektive ein optimaler Funkkanal, wird so ermittelt, dass der Frequenzabstand zu den Trägerfrequenzen, respektive Funkkanälen, benachbarter Zugriffspunkte möglichst gross ist, wobei der Frequenzabstand insbesondere zu denjenigen benachbarten Zugriffspunkten möglichst gross ist, die einen hohen Gewichtungsfaktor aufweisen, beispielsweise weil sie eine hohe Benutzungsrate oder eine hohe Störungsrate aufweisen.

Vorzugsweise ist das computerbasierte System eingerichtet, die Ermittlung der optimalen Trägerfrequenz des ersten computerisierten Zugriffspunkts dann vorzunehmen, wenn erfasste aktuelle Betriebswerte des ersten computerisierten Zugriffspunkts angeben, dass die aktuelle Anzahl Benutzer, die mit dem ersten computerisierten Zugriffspunkt assoziiert sind, Null beträgt und dass die aktuelle Anzahl empfangener fehlerhafter Datenpakete im ersten computerisierten Zugriffspunkt einen definierten Toleranzwert überschreitet. Die Trägerfrequenzen werden folglich nur dann in einem Zugriffspunkt geändert, wenn der Zugriffspunkt nicht von Benutzern mit Endgeräten benützt wird. So können Signalverluste für Benutzer bei Kanalwechseln vermieden werden, ohne dass dazu von den computerisierten Zugriffspunkten spezielle Meldungen an die Endgeräte von Benutzern übermittelt werden müssen, wozu Ressourcen des lokalen Mobilfunknetzes verwendet werden müssten.

In einer Ausführungsvariante umfasst das computerbasierte System ein erstes autonomes Agentenmodul, das dem ersten computerisierten Zugriffspunkt zugeordnet ist, und zweite autonome Agentenmodule, die jeweils einem der zweiten computerisierten Zugriffspunkte zugeordnet sind. Das erste und die zweiten Agentenmodule sind jeweils funktional gleich ausgeführt und sind eingerichtet zum periodischen Erfassen der aktuellen Betriebswerte über die Kommunikationsverbindung, zum Speichern der Zugriffspunktinformationen, zum Ermitteln und Setzen der optimalen Trägerfrequenz über die Kommunikationsverbindung und gegebenenfalls zum Berechnen und Speichern der Gewichtungsfaktoren. Die Agentenmodule sind zudem eingerichtet zum Austauschen der Zugriffspunktinformationen über den zugeordneten computerisierten Zugriffspunkt unter den Agentenmodulen, nachdem durch das Kanalwechselmodul des betreffenden Agentenmoduls im zugeordneten computerisierten Zugriffspunkt eine ermittelte optimale Trägerfrequenz gesetzt wurde, wobei die Zugriffspunktinformationen jeweils eine Zugriffspunktidentifizierung, die aktuelle Trägerfrequenz und den berechneten Gewichtungsfaktor des zugeordneten computerisierten Zugriffspunkts umfassen. In alternativen Ausführungsvarianten sind das erste autonome Agentenmodul und die zweiten autonomen Agentenmodule jeweils auf einem separaten Computer ausgeführt, wobei die separaten Computer über eine Kommunikationsverbindung miteinander verbunden sind, oder das erste autonome Agentenmodul und/oder mindestens einige der zweiten autonomen Agentenmodule sind auf einem gemeinsamen Computer ausgeführt. Die Zuordnung von autonomen Agentenmodulen zu den computerisierten Zugriffspunkten ermöglicht die automatische und unabhängige Überwachung jedes einzelnen computerisierten Zugriffspunkts, den Austausch von aktuellen Trägerfrequenzen und Gewichtungsfaktoren, die auf den anlässlich der autonomen und unabhängigen Überwachungen erfassten Betriebswerten der computerisierten Zugriffspunkte basieren, unter den Agentenmodulen, und die gezielte Ermittlung optimaler Trägerfrequenzen basierend auf den ausgetauschten Trägerfrequenzen und Gewichtungsfaktoren durch die autonomen Agentenmodule jeweils für den Ihnen zugeordneten computerisierten Zugriffspunkt.

In einer Ausführungsvariante ist das computerbasierte System eingerichtet zum Speichern von historischen Zugriffspunktinformationen über die computerisierten Zugriffspunkte. In dieser Ausführungsvariante ist das computerbasierte System eingerichtet, Zugriffspunktinformationen über die computerisierten Zugriffspunkte nicht unter den Agentenmodulen auszutauschen, wenn die gespeicherten Zugriffspunktinformationen des Agentenmoduls, das dem Zugriffspunkt zugeordnet ist, in welchem eine ermittelte optimale Trägerfrequenz gesetzt wurde, mit historischen Zugriffspunktinformationen übereinstimmen. Durch Vergleichen von Zugriffspunktinformationen nach dem Setzen der ermittelten optimalen Trägerfrequenz mit historischen Zugriffspunktinformationen kann festgestellt werden, ob sich eine bestimmte Konfiguration der Zugriffspunkte wiederholt hat, das heisst, ob dieselben Trägerfrequenzen, respektive die selben Funkkanäle, bereits schon früher den Zugriffspunkten gleich zugeordnet wurden. Dadurch, dass der Austausch von Zugriffspunktinformationen unter den Agentenmodulen unterbleibt, wenn die Konfiguration der Zugriffspunkte einer historischen Konfiguration entspricht, kann vermieden werden, dass sich die Zyklen des Optimierungsprozesses ständig wiederholen. Ein Zyklieren des Optimierungsprozesses kann auch dadurch vermindert werden, dass der Optimierungsprozess jeweils zu einem durch einen Zufallsprozess bestimmten Zeitpunkt gestartet wird, dass Zeitgrenzen und Iterationsgrenzen berücksichtigt werden, und/oder dass ein Verbesserungsgrad bestimmt wird und dass keine neue Trägerfrequenz gesetzt wird, wenn der bestimmte Verbesserungsgrad einen definierten Grenzwert nicht übertrifft.

Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:

Figur 1 zeigt ein Blockdiagramm, welches schematisch ein lokales Funknetz mit mehreren computerisierten Zugriffspunkten darstellt, die mit einem computerbasierten System gemäss einer ersten Ausführungsvariante verbunden sind.

Figur 2 zeigt ein Blockdiagramm, welches schematisch ein lokales Funknetz mit mehreren computerisierten Zugriffspunkten darstellt, die mit einem computerbasierten System gemäss einer zweiten Ausführungsvariante verbunden sind.

Figur 3 zeigt ein Blockdiagramm, welches schematisch ein autonomes Agentenmodul des computerbasierten Systems darstellt.

Figur 4 zeigt ein Flussdiagramm, das schematisch den Verfahrensablauf in einem autonomen Agentenmodul des computerbasierten Systems darstellt.

Wege zur Ausführung der Erfindung

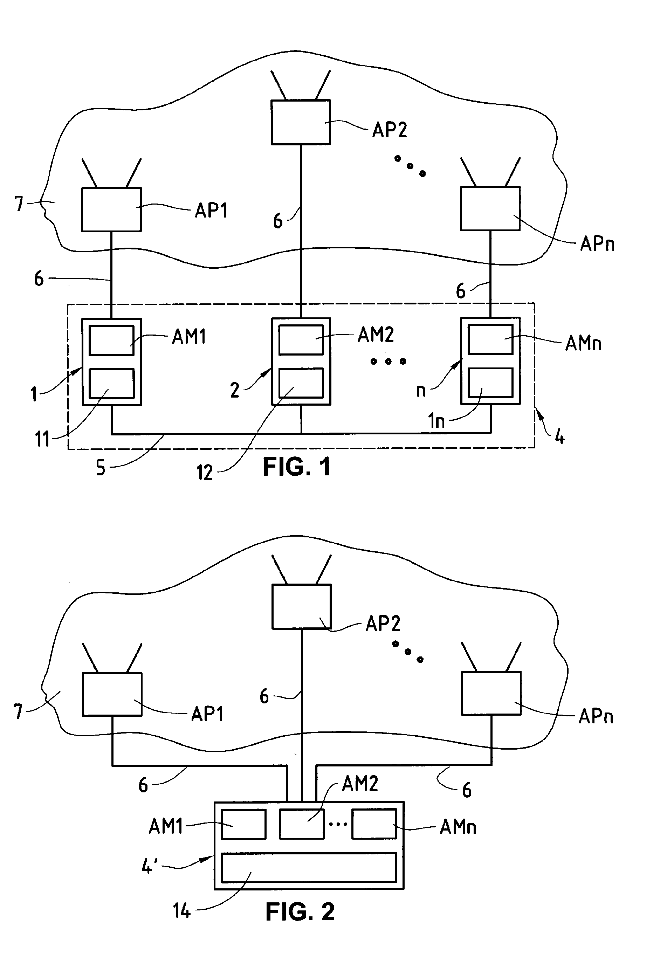

In den Figuren 1 und 2 werden einander entsprechende, gleiche Komponenten durch gleiche Bezugszeichen bezeichnet.

In den Figuren 1 und 2 bezeichnet das Bezugszeichen 7 ein lokales Funknetz, ein so genanntes WLAN. Die Bezugszeichen AP1, AP2 und APn bezeichnen computerisierte Zugriffspunkte, so genannte Access Points, zum lokalen Funknetz 7, welche Benutzern mit entsprechenden funkbasierten Kommunikationsendgeräten den Zugang zum lokalen Funknetz 7 ermöglichen.

Wie in den Figuren 1 und 2 dargestellt ist, sind die computerisierten Zugriffspunkte AP1, AP2, APn über Kommunikationsverbindungen 6 mit den computerbasierten Systemen 4 respektive 4' verbunden. Die Kommunikationsverbindungen 6 sind kontaktbasierte Verbindungen, wie Kommunikationsbusverbindungen oder Festnetzverbindungen, oder drahtlose Verbindungen, die jeweils den Datenaustausch zwischen einem der Zugriffspunkte AP1, AP2, APn und dem computerbasierten System 4, 4' ermöglichen. Die computerbasierten Systeme 4 und 4' sind eingerichtet für die dynamische Zuweisung von Trägerfrequenzen, respektive Funkkanälen, zu den computerisierten Zugriffspunkten AP1, AP2, APn des lokalen Funknetzes 7, wie in den folgenden Abschnitten detaillierter beschrieben wird.

Das computerbasierte System 4 gemäss der in der Figur 1 dargestellten ersten Ausführungsvariante umfasst mehrere Computer 1, 2, n, die über eine Kommunikationsverbindung 5 miteinander verbunden sind. Die Kommunikationsverbindung 5 ist eine Festnetzverbindung oder eine drahtlose Verbindung, die jeweils den Datenaustausch zwischen den Computern 1, 2 und n ermöglicht. Die Computer 1, 2, n umfassen jeweils ein Kommunikationsmodul für den Datenaustausch zwischen den Computern 1, 2, n über die Kommunikationsverbindung 5, und für den Datenaustausch mit den computerisierten Zugriffspunkten AP1, AP2, APn über die Kommunikationsverbindungen 6, beispielsweise basierend auf dem so genannten Simple Mail Transfer Protocol (SMTP). Die Computer 1, 2, n umfassen zudem jeweils ein autonomes Agentenmodul AM1, AM2, AMn und eine dazugehörende Agentenplattform 11, 12, 1 n. Die autonomen Agentenmodule AM1, AM2, AMn und die Agentenplattformen 11, 12, 1 n sind vorzugsweise als programmierte Softwaremodule ausgeführt, beispielsweise gemäss den FIPA-Spezifikationen (Foundation for Intelligent Physical Agents, siehe http://www.fipa.org) für das Zusammenwirken von heterogenen Softwareagenten unter Zuhilfenahme der JADE-Softwareplattform (Java Agent Development Framework, siehe http://sharon.cselt.it/projects/jade). Die Computer 1, 2, n mit den autonomen Agentenmodulen AM1, AM2, AMn und den dazugehörenden Agentenplattformen 11, 12, 1 n können in einer Ausführungsvariante jeweils gemeinsam mit dem zugeordneten Zugriffspunkt AP1, AP2, APn in einem Gehäuse installiert sein und über die oben erwähnten Kommunikationsbusverbindungen mit dem zugeordneten Zugriffspunkt AP1, AP2, APn verbunden sein.

Das computerbasierte System 4' gemäss der in der Figur 2 dargestellten zweiten Ausführungsvariante umfasst einen Computer, auf welchem die autonomen Agentenmodule AM 1, AM2, AMn auf einer gemeinsamen Agentenplattform 14 ausgeführt sind. Die gemeinsame Agentenplattform 14 ist wie die autonomen Agentenmodule AM1, AM2, AMn vorzugsweise als programmiertes Softwaremodul, beispielsweise gemäss den FIPA-Spezifikationen unter Zuhilfenahme der JADE-Softwareplattform ausgeführt. Der Computer 4 umfasst zudem ein Kommunikationsmodul für den Datenaustausch mit den computerisierten Zugriffspunkten AP1, AP2, APn, über die Kommunikationsverbindungen 6, beispielsweise basierend auf SMTP.

Die autonomen Agentenmodule AM1, AM2, AMn und die Agentenplattformen 11, 12, 1 n respektive 14 sind vorzugsweise auf einem Computerprogrammprodukt ausgeführt, das ein computerlesbares Medium mit darin enthaltenen Computerprogrammcodemitteln zur Steuerung eines oder mehrerer Prozessoren des computerbasierten Systems 4 respektive 4' umfasst.

Sowohl in der ersten Ausführungsvariante gemäss Figur 1 als auch in der zweiten Ausführungsvariante gemäss der Figur 2 sind die autonomen Agentenmodule AM1, AM2, AMn jeweils einem der Zugriffspunkte AP1, AP2, APn zugeordnet.

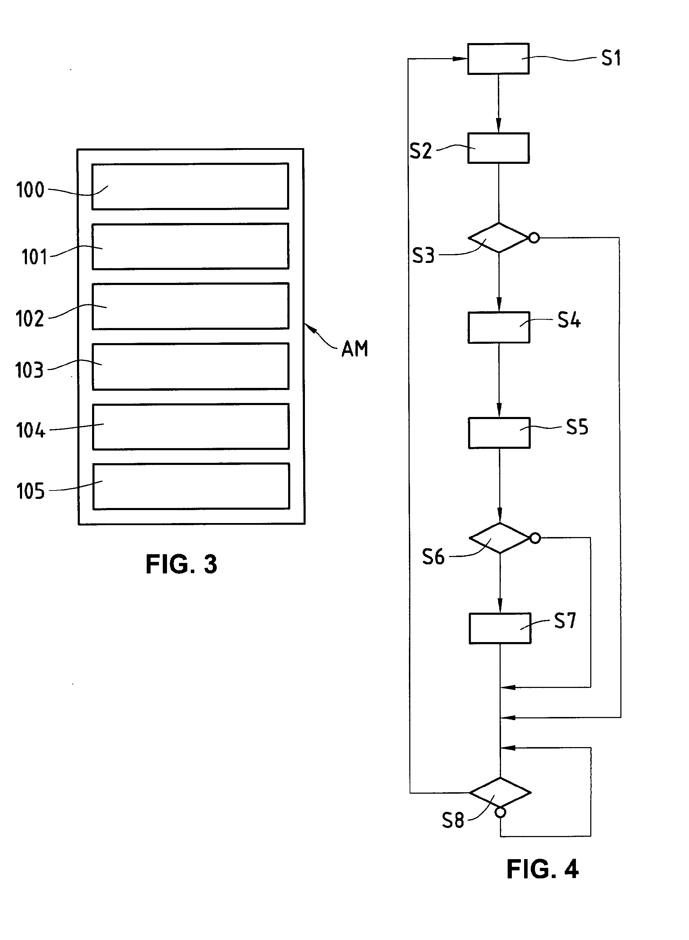

In der Figur 3 ist schematisch ein autonomes Agentenmodul AM dargestellt, das gleich ausgeführt ist wie die autonomen Agentenmodule AM1, AM2, AMn. Das Agentenmodul AM umfasst (wie die Agentenmodule AM1, AM2 und AMn) ein Optimierungsmodul 100, ein Kanalwechselmodul 101, ein Gewichtungsmodul 102, ein Überwachungsmodul 103, ein Aktualisierungsmodul 104 und ein Speichermodul 105.

In den folgenden Abschnitten wird mit Bezug auf die Figur 4 die Funktionalität der autonomen Agentenmodule AM, AM1, AM2, AMn und ihrer Module am Beispiel des Verfahrensablaufs in einem der autonomen Agentenmodule AM1, AM2, AMn des computerbasierten Systems 4, 4' beschrieben.

Im Schritt S1 erfasst das Überwachungsmodul 103 des Agentenmoduls AM1, AM2, AMn aktuelle Betriebswerte des zugeordneten Zugriffspunkts AP1, AP2, APn. Dabei werden die Betriebswerte durch das Überwachungsmodul 103 via die Kommunikationsverbindung 6 aus der so genannten Management Information Database (MIB) des zugeordneten Zugriffspunkts AP1, AP2, APn gelesen und im betreffenden Agentenmodul AM1, AM2, AMn gespeichert. Entsprechend den in den Figuren 1 und 2 dargestellten Beispielen werden so im Agentenmodul AM1 Betriebswerte des Zugriffspunkts AP1, im Agentenmodul AM2 Betriebswerte des Zugriffspunkts AP2 und im Agentenmodul AMn Betriebswerte des Zugriffspunkts APn gespeichert. Das Überwachungsmodul 103 erfasst so aktuelle Betriebswerte, die die aktuelle Anzahl Benutzer des zugeordneten Zugriffspunkts AP1, AP2, APn angeben, die die aktuelle Anzahl empfangener fehlerhafter Datenpakete im zugeordneten Zugriffspunkt AP1, AP2, APn angeben, und die die aktuelle Anzahl empfangener fehlerloser Datenpakete im zugeordneten Zugriffspunkt AP1, AP2, APn angeben.

Im Schritt S2 berechnet das Gewichtungsmodul 102 des Agentenmoduls AM1, AM2, AMn, basierend auf den im Schritt S1 erfassten aktuellen Betriebswerten, einen Gewichtungsfaktor für den zugeordneten Zugriffspunkt AP1, AP2, APn. Das Gewichtungsmodul 102 berechnet den Gewichtungsfaktor für den zugeordneten Zugriffspunkt AP1, AP2, APn, basierend auf einer Benutzungsrate des zugeordneten Zugriffspunkts AP1, AP2, APn, basierend auf einer Störungsrate des zugeordneten Zugriffspunkts AP1, AP2, APn und basierend auf einer Benutzungswahrscheinlichkeit des zugeordneten Zugriffspunkts AP1, AP2, APn. Dabei berechnet das Gewichtungsmodul 102 die Benutzungsrate des zugeordneten Zugriffspunkts AP1, AP2, APn durch Division der im Schritt S1 erfassten aktuellen Anzahl Benutzer des zugeordneten Zugriffspunkts AP1, AP2, APn durch die maximale Anzahl von Benutzern des zugeordneten Zugriffspunkts AP1, AP2, APn. Das Gewichtungsmodul 102 berechnet die Störungsrate des zugeordneten Zugriffspunkts AP1, AP2, APn durch Division der im Schritt S1 erfassten aktuellen Anzahl empfangener fehlerhafter Datenpakete im zugeordneten Zugriffspunkts AP1, AP2, APn durch die totale Anzahl empfangener Datenpakete im zugeordneten Zugriffspunkt AP1, AP2, APn. Das Gewichtungsmodul 102 berechnet die Benutzungswahrscheinlichkeit des zugeordneten Zugriffspunkts AP1, AP2, APn als Wahrscheinlichkeit aus der Verteilung gespeicherter historischer Werte der erfassten Anzahl Benutzer des zugeordneten Zugriffspunkts AP1, AP2, APn. Schliesslich übergibt das Gewichtungsmodul 102 den berechneten Gewichtungsfaktor für den zugeordneten Zugriffspunkt AP1, AP2, APn dem Speichermodul 105 des betreffenden Agentenmoduls AM1, AM2 AMn zum Speichern. Zum Beispiel berechnet das Gewichtungsmodul des Agentenmoduls AM2 den Gewichtungsfaktor für den zugeordneten Zugriffspunkt AP2 basierend auf der Benutzungsrate des zugeordneten Zugriffspunkts AP2, basierend auf der Störungsrate des zugeordneten Zugriffspunkts AP2 und basierend auf der Benutzungswahrscheinlichkeit des zugeordneten Zugriffspunkts AP2 und lässt den berechneten Gewichtungsfaktor lokal im Speichermodul 105 des Agentenmoduls AM2 speichern. Gemäss Formel (1) wird der Gewichtungsfaktor $w_i$ für den Zugriffspunkt i aus dem dreifach gewichteten Wert der Benutzungsrate $u_i$ des Zugriffspunkts i, aus dem Wert der Störungsrate $r_i$ des Zugriffspunkts i und aus dem Wert der Benutzungswahrscheinlichkeit $p_i$ des Zugriffspunkts i berechnet:

$$w_i = \frac{3u_i + r_i + P_i}{5} \tag{1}$$

Im Schritt S3 untersucht das Überwachungsmodul 103 des Agentenmoduls AM1, AM2, AMn, ob die im Schritt S1 erfasste aktuelle Anzahl Benutzer des zugeordneten Zugriffspunkts AP1, AP2, APn Null beträgt und ob die im Schritt S1 erfasste aktuelle Anzahl empfangener fehlerhafter Datenpakete im zugeordneten Zugriffspunkt AP1, AP2, APn einen definierten Toleranzwert überschreitet. Falls die Untersuchung negativ ausfällt, das heisst falls die aktuelle Anzahl Benutzer des zugeordneten Zugriffspunkts AP1, AP2, APn grösser als Null ist oder die aktuelle Anzahl empfangener fehlerhafter Datenpakete im zugeordneten Zugriffspunkt AP1, AP2, APn den definierten Toleranzwert nicht überschreitet, fährt das Verfahren im Agentenmodul AM1, AM2, AMn im Schritt S8 fort. Andernfalls fährt das Verfahren im Agentenmodul AM1, AM2, AMn im Schritt S4 fort.

Im Schritt S4 ermittelt das Optimierungsmodul 100 des Agentenmoduls AM1, AM2, AMn, basierend auf den gespeicherten Zugriffspunktinformationen über die Zugriffspunkte AP1, AP2, APn eine optimale Trägerfrequenz, respektive einen optimalen Funkkanal für den zugeordneten Zugriffspunkt AP1, AP2, APn. Die Zugriffspunktinformationen über die benachbarten Zugriffspunkte AP1, AP2, APn sind im Speichermodul 105 gespeichert und umfassen neben einer Identifizierung des betreffenden Zugriffspunkts AP1, AP2, APn die zuletzt gemeldete Trägerfrequenz, respektive den zuletzt gemeldeten Funkkanal des betreffenden Zugriffspunkts AP1, AP2, APn und den zuletzt gemeldeten Gewichtungsfaktor des betreffenden Zugriffspunkts AP1, AP2, APn. Zum Beispiel ermittelt das Optimierungsmodul 100 des Agentenmoduls AM2 die optimale Trägerfrequenz, respektive den optimalen Funkkanal für den zugeordneten Zugriffspunkt AP2, basierend auf der aktuellen Trägerfrequenz, respektive dem aktuellen Funkkanal des zugeordneten Zugriffspunkts AP2, aus den aktuellen Trägerfrequenzen, respektive aktuellen Funkkanälen der benachbarten Zugriffspunkte AP1, APn und aus den Gewichtungsfaktoren der benachbarten Zugriffspunkte AP1, APn. Dabei ermittelt das Optimierungsmodul 100 die optimale Trägerfrequenz für den zugeordneten Zugriffspunkt AP2, indem aus mehreren definierten Funkkanälen ein Funkkanal mit einer zugeordneten Trägerfrequenz so gewählt wird, dass die Summe der Differenzen zwischen der Trägerfrequenz des gewählten Funkkanals und den gespeicherten, zuletzt gemeldeten Trägerfrequenzen der benachbarten Zugriffspunkte AP1 und APn möglichst gross ist, wobei die Differenzen jeweils durch den gespeicherten zuletzt gemeldeten Gewichtungsfaktor des betreffenden benachbarten Zugriffspunkts AP1, APn gewichtet werden. Die Formel (2) gibt die Optimierungsfunktion $f_{opt}(i)$ für den Zugriffspunkt i an, wobei $w_j$ der Gewichtungsfaktor des benachbarten Zugriffspunkts j, und $\Delta(i, j)$ die Differenz zwischen der Trägerfrequenz des Zugriffspunkts i und der Trägerfrequenz des benachbarten Zugriffspunkts j ist:

$$f_{opt}(i) = \sum_{j} w_j \Delta(i, j) \tag{2}$$

Im Schritt S5 setzt das Kanalwechselmodul 101 des Agentenmoduls AM1, AM2, AMn die im Schritt S4 ermittelte optimale Trägerfrequenz, respektive den ermittelten optimalen Funkkanal im zugeordneten Zugriffspunkt AP1, AP2, APn. Dabei wird die ermittelte optimale Trägerfrequenz, respektive der ermittelte optimale Funkkanal durch das Kanalwechselmodul 101 via die Kommunikationsverbindung 6 in die MIB des zugeordneten Zugriffspunkts AP1, AP2, APn geschrieben. Schliesslich übergibt das Kanalwechselmodul 101 die gesetzte optimale Trägerfrequenz, respektive den gesetzten optimalen Funkkanal dem Speichermodul 105 des betreffenden Agentenmoduls AM1, AM2 AMn zum Speichern. Zum Beispiel schreibt das Kanalwechselmodul 101 des Agentenmoduls AM2 die im Schritt S4 ermittelte optimale Trägerfrequenz respektive den ermittelten optimalen Funkkanal in die MIB des zugeordneten Zugriffspunkts AP2 und lässt die ermittelte optimale Trägerfrequenz, respektive den ermittelten optimalen Funkkanal lokal im Speichermodul 105 des Agentenmoduls AM2 speichern.

Im Schritt S6 vergleicht das Kanalwechselmodul 101 des Agentenmoduls AM1, AM2, AMn die gespeicherten Zugriffspunktinformationen über die Zugriffspunkte AP1, AP2, APn mit gespeicherten historischen Zugriffspunktinformationen über die Zugriffspunkte AP1, AP2, APn. Insbesondere vergleicht das Kanalwechselmodul 101 des Agentenmoduls AM1, AM2, AMn die als Zugriffspunktinformationen gespeicherten Trägerfrequenzen respektive Funkkanäle, die den Zugriffspunkten AP1, AP2, APn zugeordnet sind, mit Trägerfrequenzen respektive Funkkanälen, die als historische Zugriffspunktinformationen gespeichert sind und vergangene Konfigurationen der Zuordnung von Trägerfrequenzen respektive Funkkanäle zu den Zugriffspunkten AP1, AP2, APn abgeben. Zum Beispiel vergleicht das Kanalwechselmodul 101 des Agentenmoduls AM2 die im lokalen Speichermodul 105 gespeicherten Trägerfrequenzen respektive Funkkanäle, die den Zugriffspunkten AP1, AP2, APn zugeordnet sind, mit historischen Trägerfrequenzen, respektive Funkkanälen, die im lokalen Speichermodul 105 gespeichert sind und vergangene Konfigurationen der Zuordnung von Trägerfrequenzen, respektive Funkkanäle zu den Zugriffspunkten AP1, AP2, APn angeben. Falls die aktuellen Trägerfrequenzen respektive Funkkanäle, die gemäss den gespeicherten Zugriffspunktinformationen den Zugriffspunkten AP1, AP2, APn zugeordnet sind, mit einem Satz historischer Trägerfrequenzen, respektive Funkkanälen übereinstimmen, die gemäss den gespeicherten historischen Zugriffspunktinformationen den Zugriffspunkten AP1, AP2, APn früher zugeordnet waren, fährt das Verfahren im Agentenmodul AM1, AM2, AMn (im gewählten Beispiel im AM2) im Schritt S7 fort. Andernfalls, wenn die Trägerfrequenzen respektive Funkkanäle vorher noch nicht in der aktuellen Konfiguration den Zugriffspunkten AP1, AP2, APn zugeordnet waren, fährt das Verfahren im Agentenmodul AM1, AM2, AMn (im gewählten Beispiel im AM2) im Schritt S8 fort.

Tabelle 1

| Zugriffspunktinformation im Agentenmodul AM2 | Identifizierung | Trägerfrequenz/ Funkkanal | Gewichtungsfaktor | Anzahl Benutzer | Anzahl fehlerhafter Pakete | Anzahl fehlerloser Pakete |
|---|---|---|---|---|---|---|
| zugeordneter Zugriffspunkt | AP2 | a | $W_2$ | x | y | z |
| benachbarter Zugriffspunkt | AP1 | b | $w_1$ | - | - | - |
| benachbarter Zugriffspunkt | APn | c | $W_n$ | - | - | - |

Im Schritt S7 übermittelt das Aktualisierungsmodul 104 des Agentenmoduls AM1, AM2, AMn aktuelle Zugriffspunktinformationen an die Agentenmodule AM1, AM2, AMn, die den benachbarten Zugriffspunkten AP1, AP2, APn zugeordnet sind. Die Agentenmodule AM1, AM2, AMn der benachbarten Zugriffspunkte AP1, AP2, APn speichern die empfangenen Zugriffspunktinformationen jeweils im lokalen Speichermodul 105. Insbesondere übermittelt das Aktualisierungsmodul 104 des Agentenmoduls AM1, AM2, AMn im Schritt S7 die Identifizierung des zugeordneten Zugriffspunkts AP1, AP2, APn, den im Schritt S2 berechneten Gewichtungsfaktor des zugeordneten Zugriffspunkts AP1, AP2, APn und die im Schritt S4 ermittelte und im Schritt S5 im zugeordneten Zugriffspunkt AP1, AP2, APn gesetzte optimale Trägerfrequenz (respektive den optimalen Funkkanal) an die Agentenmodule AM1, AM2, AMn der benachbarten Zugriffspunkte AP1, AP2, APn. Zum Beispiel übermittelt das Aktualisierungsmodul 104 des Agentenmoduls AM2 die Identifizierung des zugeordneten Zugriffspunkts AP2, den im Schritt S2 berechneten Gewichtungsfaktor des zugeordneten Zugriffspunkts AP2 und die im Schritt S4 ermittelte und im Schritt S5 im zugeordneten Zugriffspunkt AP2 gesetzte optimale Trägerfrequenz (respektive den optimalen Funkkanal) an die Agentenmodule AM1 und AMn der benachbarten Zugriffspunkte AP1 respektive APn.

In der Tabelle 1 ist ein Beispiel der Zugriffspunktinformationen dargestellt, die im Speichermodul 105 des Agentenmoduls AM2 gespeichert sind. Wie in der Tabelle 1 am Beispiel des Agentenmoduls AM2 gezeigt wird, sind die Zugriffspunkte AP1, AP2, APn (im Beispiel der Tabelle 1 AP2), denen die Agentenmodule AM1, AM2, AMn zugeordnet sind (im Beispiel der Tabelle 1 AM2) entsprechend gekennzeichnet. Wie in der Tabelle 1 am Beispiel des Agentenmoduls AM2 weiter gezeigt wird, sind die benachbarten Zugriffspunkte AP1, AP2, APn (im Beispiel der Tabelle 1 AP1, APn) ebenfalls entsprechend gekennzeichnet.

Im Schritt S9 überprüft das Agentenmodul AM1, AM2, AMn, beispielsweise auf Grund eines Zeitwerts, ob die aktuellen Betriebswerte des zugeordneten Zugriffspunkts AP1, AP2, APn wieder überwacht werden müssen und fährt gegebenenfalls im Schritt S1 fort. Zum Beispiel überprüft das Agentenmodul AM2, ob die aktuellen Betriebswerte des zugeordneten Zugriffspunkts AP2 wieder überwacht werden müssen und fährt gegebenenfalls im Schritt S1 fort.

**Patentansprüche**

1. Computerbasiertes System (4, 4') für die dynamische Zuweisung von Trägerfrequenzen zu computerisierten Zugriffspunkten (AP1, AP2, APn) eines lokalen Funknetzes (7), **gekennzeichnet durch**

   ein Kommunikationsmodul zur Verbindung des computerbasierten Systems (4, 4') über eine Kommunikationsverbindung (6) mit den computerisierten Zugriffspunkten (AP1, AP2, APn),

   ein Speichermodul (105) zum Speichern von Zugriffspunktinformationen über die computerisierten Zugriffspunkte (AP1, AP2, APn), welche Zugriffspunktinformationen jeweils mindestens die aktuelle Trägerfrequenz des betreffenden computerisierten Zugriffspunkts (AP1, AP2, APn) umfassen,

   ein Optimierungsmodul (100) zum Ermitteln einer optimalen Trägerfrequenz für einen ersten der computerisierten Zugriffspunkte (AP2), basierend auf den gespeicherten Zugriffspunktinformationen über die computerisierten Zugriffspunkte (AP1, AP2, APn), und

   ein Kanalwechselmodul (101) zum Setzen der ermittelten optimalen Trägerfrequenz im ersten computerisierten Zugriffspunkt (AP2) über die Kommunikationsverbindung (6).

2. Computerbasiertes System (4, 4') nach Anspruch 1, **dadurch gekennzeichnet, dass** es ein Überwachungsmodul (101) umfasst zum Erfassen aktueller Betriebswerte vom ersten computerisierten Zugriffspunkt (AP2) über die Kommunikationsverbindung (6), dass es ein Gewichtungsmodul (102) umfasst zum Berechnen eines Gewichtungsfaktors für den ersten computerisierten Zugriffspunkt (AP2), basierend auf den erfassten Betriebswerten des ersten computerisierten Zugriffspunkts (AP2), dass das Speichermodul (105) eingerichtet ist zum Speichern von Zugriffspunktinformationen, die den berechneten Gewichtungsfaktor des ersten computerisierten Zugriffspunkts (AP2) und Gewichtungsfaktoren von zweiten der computerisierten Zugriffspunkte (AP1, APn) umfassen, und dass das Optimierungsmodul (100) eingerichtet ist zum Ermitteln der optimalen Trägerfrequenz für den ersten computerisierten Zugriffspunkt (AP2), basierend auf der gespeicherten aktuellen Trägerfrequenz des ersten computerisierten Zugriffspunkts (AP2), basierend auf den gespeicherten Gewichtungsfaktoren der zweiten computerisierten Zugriffspunkte (AP1, APn) und basierend auf den gespeicherten aktuellen Trägerfrequenzen der zweiten computerisierten Zugriffspunkte (AP1, APn).

3. Computerbasiertes System (4, 4') nach Anspruch 2, **dadurch gekennzeichnet, dass** das Optimierungsmodul (100) eingerichtet ist, die optimale Trägerfrequenz für den ersten computerisierten Zugriffspunkt (AP2) zu ermitteln, indem aus mehreren definierten Funkkanälen ein Funkkanal mit einer zugeordneten Trägerfrequenz so gewählt wird, dass die Summe der Differenzen zwischen der zugeordneten Trägerfrequenz und den gespeicherten aktuellen Trägerfrequenzen der zweiten computerisierten Zugriffspunkte (AP1, APn) möglichst gross ist, wobei die Differenzen jeweils durch den gespeicherten Gewichtungsfaktor des betreffenden zweiten computerisierten Zugriffspunkts (AP1, APn) gewichtet werden.

4. Computerbasiertes System (4, 4') nach einem der Ansprüche 2 oder 3, **dadurch gekennzeichnet, dass** das Gewichtungsmodul (102) eingerichtet ist zum Berechnen eines Gewichtungsfaktors für den ersten computerisierten Zugriffspunkt (AP2), basierend auf einer Benutzungsrate des ersten computerisierten Zugriffspunkts (AP2), basierend auf einer Störungsrate des ersten computerisierten Zugriffspunkts (AP2) und basierend auf einer Benutzungswahrscheinlichkeit des ersten computerisierten Zugriffspunkts (AP2).

5. Computerbasiertes System (4, 4') nach einem der Ansprüche 2 bis 4, **dadurch gekennzeichnet, dass** das Überwachungsmodul (103) eingerichtet ist zum Erfassen eines aktuellen Betriebswerts vom ersten computerisierten Zugriffspunkt (AP2), der die aktuelle Anzahl Benutzer, die mit dem ersten computerisierten Zugriffspunkt (AP2) assoziiert sind, angibt, zum Erfassen eines aktuellen Betriebswerts vom ersten computerisierten Zugriffspunkt (AP2), der die aktuelle Anzahl empfangener fehlerhafter Datenpakete im ersten computerisierten Zugriffspunkt (AP2) angibt, und zum Erfassen eines aktuellen Betriebswerts vom ersten computerisierten Zugriffspunkt (AP2), der die aktuelle Anzahl empfangener fehlerloser Datenpakete im ersten computerisierten Zugriffspunkt (AP2) angibt.

6. Computerbasiertes System (4, 4') nach Anspruch 5, **dadurch gekennzeichnet, dass** das Gewichtungsmodul (102) eingerichtet ist zum Berechnen des Gewichtungsfaktors für den ersten computerisierten Zugriffspunkt (AP2), basierend auf einer Benutzungsrate, die durch Division der erfassten Anzahl Benutzer des ersten computerisierten Zugriffspunkts (AP2) durch eine maximale Anzahl von Benutzern des ersten computerisierten Zugriffspunkts (AP2) berechnet wird, basierend auf einer Störungsrate, die durch Division der erfassten Anzahl empfangener fehlerhafter Datenpakete im ersten computerisierten Zugriffspunkt (AP2) durch die totale Anzahl empfangener Datenpakete im ersten computerisierten Zugriffspunkt (AP2) berechnet wird, und basierend auf einer Benutzungswahrscheinlichkeit, die aus gespeicherten historischen Werten der erfassten Anzahl Benutzer des ersten computerisierten Zugriffspunkts (AP2) berechnet wird.

7. Computerbasiertes System (4, 4') nach einem der Ansprüche 2 bis 6, **dadurch gekennzeichnet, dass** es eingerichtet ist, das Optimierungsmodul (100) für die Ermittlung der optimalen Trägerfrequenz des ersten computerisierten Zugriffspunkts (AP2) zu aktivieren, wenn erfasste aktuelle Betriebswerte des ersten computerisierten Zugriffspunkts (AP2) angeben, dass die aktuelle Anzahl Benutzer, die mit dem ersten computerisierten Zugriffspunkt (AP2) assoziiert sind, Null beträgt und dass die aktuelle Anzahl empfangener fehlerhafter Datenpakete im ersten computerisierten Zugriffspunkt (AP2) einen definierten Toleranzwert überschreitet.

8. Computerbasiertes System (4, 4') nach einem der Ansprüche 2 bis 7, **dadurch gekennzeichnet, dass** es ein erstes autonomes Agentenmodul (AM2) umfasst, das dem ersten computerisierten Zugriffspunkt (AP2) zugeordnet ist, dass es zweite autonome Agentenmodule (AM1, AMn) umfasst, die jeweils einem der zweiten computerisierten Zugriffspunkte (AP1, APn) zugeordnet sind, dass das erste und die zweiten Agentenmodule (AM1, AM2, AMn) jeweils funktional gleich ausgeführt sind und ein Überwachungsmodul (103), ein Speichermodul (105), ein Gewichtungsmodul (102), ein Optimierungsmodul (100), ein Kanalwechselmodul (101) sowie ein Aktualisierungsmodul (104) umfassen, welches Aktualisierungsmodul (104) eingerichtet ist zum Austauschen der Zugriffspunktinformationen über den zugeordneten computerisierten Zugriffspunkt (AP1, AP2, APn) unter den Agentenmodulen (AM1, AM2, AMn), wobei die Zugriffspunktinformationen jeweils eine Zugriffspunktidentifizierung, die aktuelle Trägerfrequenz und den berechneten Gewichtungsfaktor des zugeordneten computerisierten Zugriffspunkts (AP1, AP2, APn) umfassen, dass die Agentenmodule (AM1, AM2, AMn) jeweils eingerichtet sind, das Überwachungsmodul (103) des betreffenden Agentenmoduls (AM1, AM2, AMn) periodisch zum Erfassen aktueller Betriebswerte im zugeordneten computerisierten Zugriffspunkt (AP1, AP2, APn) zu aktivieren, und dass die Agentenmodule (AM1, AM2, AMn) jeweils eingerichtet sind, das Aktualisierungsmodul (104) des betreffenden Agentenmoduls (AM1, AM2, AMn) für den Austausch der Zugriffspunktinformationen zu aktivieren, nachdem durch das Kanalwechselmodul (101) des betreffenden Agentenmoduls (AM1, AM2, AMn) im zugeordneten computerisierten Zugriffspunkt (AP1, AP2, APn) eine ermittelte optimale Trägerfrequenz gesetzt wurde.

9. Computerbasiertes System (4, 4') nach Anspruch 8, **dadurch gekennzeichnet, dass** das Speichermodul (105) eingerichtet ist zum Speichern von historischen Zugriffspunktinformationen über die computerisierten Zugriffspunkte (AP1, AP2, APn) und dass die Agentenmodule (AM1, AM2, AMn) jeweils eingerichtet sind, das Aktualisierungsmodul (104) des betreffenden Agentenmoduls (AM1, AM2, AMn) nicht für den Austausch der Zugriffspunktinformationen zu aktivieren, wenn die gespeicherten Zugriffspunktinformationen des betreffenden Agentenmoduls (AM1, AM2, AMn) mit historischen Zugriffspunktinformationen des betreffenden Agentenmoduls (AM1, AM2, AMn) übereinstimmen.

10. Computerbasiertes System (4, 4') nach einem der Ansprüche 8 oder 9, **dadurch gekennzeichnet, dass** das erste autonome Agentenmodul (AM2) und die zweiten autonomen Agentenmodule (AM1, AMn) jeweils auf einem separaten Computer (1, 2, 3) ausgeführt sind, wobei die separaten Computer (1, 2, 3) über eine Kommunikationsverbindung (5) miteinander verbunden sind.

11. Computerbasiertes System (4, 4') nach einem der Ansprüche 8 oder 9, **dadurch gekennzeichnet, dass** das erste autonome Agentenmodul (AM2) und/oder mindestens einige der zweiten autonomen Agentenmodule (AM1, AMn) auf einem gemeinsamen Computer ausgeführt sind.

12. Computerprogrammprodukt umfassend: ein computerlesbares Medium mit darin enthaltenen Computerprogrammcodemitteln zur Steuerung eines oder mehrerer Prozessoren eines computerbasierten Systems (4, 4') für die dynamische Zuweisung von Trägerfrequenzen zu computerisierten Zugriffspunkten (AP1, AP2, APn) eines lokalen Funknetzes (7), die über eine Kommunikationsverbindung (6) mit dem computerbasierten System (4, 4') verbindbar sind, derart,
dass im computerbasierten System (4, 4') Zugriffspunktinformationen über die computerisierten Zugriffspunkte (AP1, AP2, APn) gespeichert werden, welche Zugriffspunktinformationen jeweils mindestens die aktuelle Trägerfrequenz des betreffenden computerisierten Zugriffspunkts (AP1, AP2, APn) umfassen,
dass durch das computerbasierte System (4, 4') eine optimale Trägerfrequenz für einen ersten der computerisierten Zugriffspunkte (AP2) ermittelt wird, basierend auf den gespeicherten Zugriffspunktinformationen über die computerisierten Zugriffspunkte (AP1, AP2, APn), und
dass durch das computerbasierte System (4, 4') die ermittelte optimale Trägerfrequenz im ersten computerisierten Zugriffspunkt (AP2) über die Kommunikationsverbindung (6) gesetzt wird.

13. Computerprogrammprodukt nach Anspruch 12, **dadurch gekennzeichnet, dass** es weitere Computerprogrammcodemittel umfasst, die die Prozessoren des computerbasierten Systems (4, 4') derart steuern, dass durch das computerbasierte System (4, 4') aktuelle Betriebswerte vom ersten computerisierten Zugriffspunkt (AP2) über die Kommunikationsverbindung (6) erfasst werden, dass durch das computerbasierte System (4, 4') basierend auf den erfassten Betriebswerten des ersten computerisierten Zugriffspunkts (AP2) ein Gewichtungsfaktor für den ersten computerisierten Zugriffspunkt (AP2) berechnet wird, dass im computerbasierten System (4, 4') Zugriffspunktinformationen gespeichert werden, die den berechneten Gewichtungsfaktor des ersten computerisierten Zugriffspunkts (AP2) und Gewichtungsfaktoren von zweiten der computerisierten Zugriffspunkte (AP1, APn) umfassen, und dass durch das computerbasierte System (4, 4') die optimale Trägerfrequenz für den ersten computerisierten Zugriffspunkt (AP2), basierend auf der gespeicherten aktuellen Trägerfrequenz des ersten computerisierten Zugriffspunkts (AP2), basierend auf den gespeicherten Gewichtungsfaktoren der zweiten computerisierten Zugriffspunkte (AP1, APn) und basierend auf den gespeicherten aktuellen Trägerfrequenzen der zweiten computerisierten Zugriffspunkte (AP1, APn) ermittelt wird.

14. Computerprogrammprodukt nach Anspruch 13, **dadurch gekennzeichnet, dass** es weitere Computerprogrammcodemittel umfasst, die die Prozessoren des computerbasierten Systems (4, 4') derart steuern, dass durch das computerbasierte System (4, 4') die optimale Trägerfrequenz für den ersten computerisierten Zugriffspunkt (AP2) ermittelt wird, indem aus mehreren definierten Funkkanälen ein Funkkanal mit einer zugeordneten Trägerfrequenz so gewählt wird, dass die Summe der Differenzen zwischen der zugeordneten Trägerfrequenz und den gespeicherten aktuellen Trägerfrequenzen der zweiten computerisierten Zugriffspunkte (AP1, APn) möglichst gross ist, wobei die Differenzen jeweils durch den gespeicherten Gewichtungsfaktor des betreffenden zweiten computerisierten Zugriffspunkts (AP1, APn) gewichtet werden.

15. Computerprogrammprodukt nach einem der Ansprüche 13 oder 14, **dadurch gekennzeichnet, dass** es weitere Computerprogrammcodemittel umfasst, die die Prozessoren des computerbasierten Systems (4, 4') derart steuern, dass durch das computerbasierte System (4, 4') ein Gewichtungsfaktor für den ersten computerisierten Zugriffspunkt (AP2) berechnet wird, basierend auf einer Benutzungsrate des ersten computerisierten Zugriffspunkts (AP2), basierend auf einer Störungsrate des ersten computerisierten Zugriffspunkts (AP2) und basierend auf einer Benutzungswahrscheinlichkeit des ersten computerisierten Zugriffspunkts (AP2).

16. Computerprogrammprodukt nach einem der Ansprüche 13 bis 15, **dadurch gekennzeichnet, dass** es weitere Computerprogrammcodemittel umfasst, die die Prozessoren des computerbasierten Systems (4, 4') derart steuern, dass durch das computerbasierte System (4, 4') ein aktueller Betriebswert vom ersten computerisierten Zugriffspunkt (AP2) erfasst wird, der die aktuelle Anzahl Benutzer, die mit dem ersten computerisierten Zugriffspunkt (AP2) assoziert sind, angibt, dass durch das computerbasierte System (4, 4') ein aktueller Betriebswert vom ersten computerisierten Zugriffspunkt (AP2) erfasst wird, der die aktuelle Anzahl empfangener fehlerhafter Datenpakete im ersten computerisierten Zugriffspunkt (AP2) angibt, und dass durch das computerbasierte System (4, 4') ein aktueller Betriebswert vom ersten computerisierten Zugriffspunkt (AP2) erfasst wird, der die aktuelle Anzahl empfangener fehlerloser Datenpakete im ersten computerisierten Zugriffspunkt (AP2) angibt.

17. Computerprogrammprodukt nach Anspruch 16, **dadurch gekennzeichnet, dass** es weitere Computerprogrammcodemittel umfasst, die die Prozessoren des computerbasierten Systems (4, 4') derart steuern, dass der Gewichtungsfaktor für den ersten computerisierten Zugriffspunkt (AP2) berechnet wird, basierend auf einer Benutzungsrate, die durch Division der erfassten Anzahl Benutzer des ersten computerisierten Zugriffspunkts (AP2) durch eine maximale Anzahl von Benutzern des ersten computerisierten Zugriffspunkts (AP2) berechnet wird, basierend auf einer Störungsrate, die durch Division der erfassten Anzahl empfangener fehlerhafter Datenpakete im ersten computerisierten Zugriffspunkt (AP2) durch die totale Anzahl empfangener Datenpakete im ersten computerisierten Zugriffspunkt (AP2) berechnet wird, und basierend auf einer Benutzungswahrscheinlichkeit, die aus gespeicherten historischen Werten der erfassten Anzahl Benutzer des ersten computerisierten Zugriffspunkts (AP2) berechnet wird.

18. Computerprogrammprodukt nach einem der Ansprüche 12 bis 17, **dadurch gekennzeichnet, dass** es weitere Computerprogrammcodemittel umfasst, die die Prozessoren des computerbasierten Systems (4, 4') derart steuern, dass das computerbasierte System (4, 4') die Ermittlung der optimalen Trägerfrequenz des ersten computerisierten Zugriffspunkts (AP2) durchführt, wenn erfasste aktuelle Betriebswerte des ersten computerisierten Zugriffspunkts (AP2) angeben, dass die aktuelle Anzahl Benutzer, die mit dem ersten computerisierten Zugriffspunkt (AP2) assoziert sind, Null beträgt und dass die aktuelle Anzahl empfangener fehlerhafter Datenpakete im ersten computerisierten Zugriffspunkt (AP2) einen definierten Toleranzwert überschreitet.

19. Computerprogrammprodukt nach einem der Ansprüche 12 bis 18, **dadurch gekennzeichnet, dass** es weitere Computerprogrammcodemittel umfasst, die die Prozessoren des computerbasierten Systems (4, 4') derart steuern, dass das computerbasierte System (4, 4') als ein erstes autonomes Agentenmodul (AM2) agiert, das dem ersten computerisierten Zugriffspunkt (AP2) zugeordnet ist, dass das computerbasierte System (4, 4') als zweite autonome Agentenmodule (AM1, AMn) agiert, die jeweils einem der zweiten computerisierten Zugriffspunkte (AP1, APn) zugeordnet sind, dass das computerbasierte System (4, 4') periodisch aktuelle Betriebswerte von den computerisierten Zugriffspunkten (AP1, AP2, APn) erfasst, denen Agentenmodule (AM1, AM2, AMn) zugeordnet sind, dass durch das computerbasierte System (4, 4') Zugriffspunktinformationen über die computerisierten Zugriffspunkte (AP1, AP2, APn) unter den Agentenmodulen (AM1, AM2, AMn) ausgetauscht werden, nachdem durch das computerbasierte System (4, 4') die ermittelte optimale Trägerfrequenz in einem computerisierten Zugriffspunkt (AP1, AP2, APn) gesetzt wurde, dem ein Agentenmodul (AM1, AM2, AMn) zugeordnet ist, wobei die Zugriffspunktinformationen jeweils eine Zugriffspunktidentifizierung, die aktuelle Trägerfrequenz und den berechneten Gewichtungsfaktor des betreffenden computerisierten Zugriffspunkts (AP1, AP2, APn) umfassen.

20. Computerprogrammprodukt nach Anspruch 19, **dadurch gekennzeichnet, dass** es weitere Computerprogrammcodemittel umfasst, die die Prozessoren des computerbasierten Systems (4, 4') derart steuern, dass im computerbasierten System (4, 4') historische Zugriffspunktinformationen über die computerisierten Zugriffspunkte (AP1, AP2, APn) gespeichert werden, und dass durch das computerbasierte System (4, 4') Zugriffspunktinformationen über die computerisierten Zugriffspunkte (AP1, AP2, APn) nicht unter den Agentenmodulen (AM1, AM2, AMn) ausgetauscht werden, wenn die gespeicherten Zugriffspunktinformationen des Agentenmoduls (AM1, AM2, AMn), das dem Zugriffspunkt (AP1, AP2, APn) zugeordnet ist, in welchem eine ermittelte optimale Trägerfrequenz gesetzt wurde, mit historischen Zugriffspunktinformationen übereinstimmen.

EP 1 480 384 A1

FIG. 1

FIG. 2

**FIG. 3**

**FIG. 4**

**Europäisches Patentamt**

# EUROPÄISCHER RECHERCHENBERICHT

Nummer der Anmeldung

EP 03 40 5356

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 2 308 789 A (AT & T WIRELESS SERVICES INC) 2. Juli 1997 (1997-07-02) | 1,12 | H04L12/28 H04Q7/36 |
| Y | * Zusammenfassung; Abbildungen 1,2 * | 2,4-6, 13,15-17 | |
| A | * Seite 5, Zeile 9 - Seite 6, Zeile 2 * | 8-11,19, 20 | |
| | * Seite 8, Zeile 6 - Seite 9, Zeile 17 * * Seite 11, Zeile 7 - Seite 12, Zeile 17 * * Seite 13, Zeile 15-22 * * Seite 14, Zeile 11 - Seite 15, Zeile 16 * | | |
| | --- | | |
| Y | DE 43 03 999 A (PHILIPS PATENTVERWALTUNG) 18. August 1994 (1994-08-18) * Seite 8, Zeile 37 - Seite 9, Zeile 37 * | 2,4-6, 13,15-17 | |
| | --- | | |
| A | US 2002/188723 A1 (MANGOLD STEFAN ET AL) 12. Dezember 2002 (2002-12-12) * Zusammenfassung; Abbildungen 1-3 * * Seite 2, linke Spalte, Absatz 20 - Seite 5, linke Spalte, Absatz 51 * | 1,12 | |
| | --- | | RECHERCHIERTE SACHGEBIETE (Int.Cl.7) |
| A | US 5 933 420 A (FISHER DAVID A ET AL) 3. August 1999 (1999-08-03) * Zusammenfassung; Abbildungen 1-3 * * Spalte 3, Zeile 10 - Spalte 6, Zeile 62 * | 1,12 | H04L H04Q |
| | --- | | |
| A | EP 1 311 087 A (AT & T CORP) 14. Mai 2003 (2003-05-14) * Zusammenfassung; Abbildungen 1,2 * * Seite 3, Absätze 9-13 * * Seite 3, Absatz 16 - Seite 4, Absatz 21 * | 1,12 | |
| | ----- | | |

Der vorliegende Recherchenbericht wurde für alle Patentansprüche erstellt

| Recherchenort | Abschlußdatum der Recherche | Prüfer |
|---|---|---|
| MÜNCHEN | 4. November 2003 | Möll, H-P |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

EP 03 40 5356

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2003

| Im Recherchenbericht angeführtes Patentdokument | | Datum der Veröffentlichung | Mitglied(er) der Patentfamilie | | Datum der Veröffentlichung |
|---|---|---|---|---|---|
| GB 2308789 | A | 02-07-1997 | AU | 7543996 A | 03-07-1997 |
| | | | BR | 9606156 A | 01-09-1998 |
| | | | CA | 2192248 A1 | 27-06-1997 |
| | | | JP | 9187067 A | 15-07-1997 |
| DE 4303999 | A | 18-08-1994 | DE | 4303999 A1 | 18-08-1994 |
| | | | AU | 670955 B2 | 08-08-1996 |
| | | | AU | 4433993 A | 17-02-1994 |
| | | | CN | 1086363 A ,B | 04-05-1994 |
| | | | DE | 59309538 D1 | 02-06-1999 |
| | | | EP | 0585994 A2 | 09-03-1994 |
| | | | JP | 7007764 A | 10-01-1995 |
| | | | US | 5475868 A | 12-12-1995 |
| US 2002188723 | A1 | 12-12-2002 | WO | 02093839 A2 | 21-11-2002 |
| US 5933420 | A | 03-08-1999 | US | 6208629 B1 | 27-03-2001 |
| EP 1311087 | A | 14-05-2003 | US | 2003087645 A1 | 08-05-2003 |
| | | | CA | 2411330 A1 | 08-05-2003 |
| | | | EP | 1311087 A2 | 14-05-2003 |

EPO FORM P0461

Für nähere Einzelheiten zu diesem Anhang : siehe Amtsblatt des Europäischen Patentamts, Nr.12/82